**Europäisches Patentamt**

**European Patent Office**

**Office européen des brevets**

(11) Veröffentlichungsnummer: **0 017 662**
**B1**

(12) **EUROPÄISCHE PATENTSCHRIFT**

(45) Veröffentlichungstag der Patentschrift: 25.07.84

(21) Anmeldenummer: 79104357.3

(22) Anmeldetag: 07.11.79

(51) Int. Cl.³: **F 16 K 17/00,**
**F 16 H 39/44, G 05 D 7/01**

(54) Druckbegrenzungs- und Mengenregelventil.

(30) Priorität: 16.11.78 DE 2849771

(43) Veröffentlichungstag der Anmeldung:
29.10.80 Patentblatt 80/22

(45) Bekanntmachung des Hinweises auf die Patenterteilung:
25.07.84 Patentblatt 84/30

(84) Benannte Vertragsstaaten:
DE FR GB SE

(56) Entgegenhaltungen:
DE - A - 1 450 457
US - A - 3 846 982

FLUID POWER INTERNATIONAL, Band 35, Nr. 412, Juli 1970, KLENK: "Open and closed loop hydraulic control circuits", Seiten 19-24

(73) Patentinhaber: Linde Aktiengesellschaft
Abraham-Lincoln-Strasse 21
D-6200 Wiesbaden (DE)

(72) Erfinder: Krusche, Alfred
Tannenstrasse 12
D-8752 Johannesberg (DE)

(74) Vertreter: Schaefer, Gerhard, Dr.
Linde Aktiengesellschaft Zentrale Patentabteilung
D-8023 Höllriegelskreuth (DE)

**Beschreibung**

Die Erfindung betrifft ein Druckbegrenzungs- und Mengenregelventil für ein hydrostatisches Getriebe mit einem in einer Bohrung schließend gegen die Kraft einer Feder verschiebbaren Schieberkolben, der eine zur Zulaufseite offene, mit einer Drosselverengung versehene Längsbohrung aufweist, die in eine Querbohrung mündet, wobei an der genannten Bohrung, in der der Schieberkolben verschiebbar ist, eine mit einer Ablaufquerbohrung verbundene Ringnut und mindestens ein Anschlag für eine Endlage des Schieberkolbens vorgesehen sind.

Der Erfindung liegt die Aufgabe zugrunde, ein Druckbegrenzungsund Mengenregelventil zu schaffen, welches nicht mehr Bauraum beansprucht, als die bisher bekannten Ausspeisedruckbegrenzungsventile, so daß es anstelle eines solchen in den bisher üblichen Anschluß eingeschraubt werden kann.

Diese Aufgabe wird gemäß der Erfindung dadurch gelöst, daß die Querbohrung im Schieberkolben in dessen Endlage von der Wand der Bohrung, in der der Schieberkolben verschiebbar ist, völlig abgeschlossen ist und der Schieberkolben so weit gegen die Kraft der Feder verschiebbar ist, daß auch in der Lage der weitesten Verschiebung gegen die Kraft der Feder die Querbohrung im Schieberkolben von der Wand der Bohrung auf der anderen Seite der Ringnut abgedeckt ist und daß in dieser Lage des Schieberkolbens eine Verbindung zwischen der Längsbohrung und dem geschlossenen, die Feder enthaltenden Raum, vorhanden ist.

Auf diese Weise wird das bekannte Ventil derart weiterausgestaltet, daß es bei Überschreiten eines bestimmten vorgegebenen Druckes als Mengenregelventil arbeitet.

In der DE—A—14 50 457 ist bereits ein Mengenregelventil offenbart und zu diesem ist eine Durchflußcharackteristik beschrieben, aus der zu erkennen ist, daß im Anfangsbereich bei zunehmendem Druck die Durchflußmenge steigt und dann mit steigendem Druck der durchfließende Strom langsam in einen konstanten Wert übergeht. Dieses Ventil entspricht jedoch nicht der Bauweise eines Ventiles der Art, wie im Oberbegriff des Patentanspruches 1 angegeben und ist auch nicht geeignet, ein solches Ventil weiterauszugestalten.

Bei einer zweckmäßigen Ausgestaltungsform des Ventiles ist die genannte Verbindung durch eine in Längsrichtung des Schieberkolbens verlaufende Abflachung an diesem gebildet. Diese Abflachung kann in einer zweckmäßigen Ausgestaltungsform von der Mündung der Querbohrung im Schieberkolben ausgehen oder kann in einer anderen Ausgestaltungsform neben der Mündung der Querbohrung angeordnet sein, wobei in der Wand der Bohrung im Gehäuse zwischen der Ringnut und dem Federraum eine Zusatzringnut angeordnet ist, welche bei entsprechenden Lagen des Schieberkolbens eine Verbindung zwischen der Mündung der Querbohrung und der Abflachung herstellt.

Bei im geschlossenen Kreislauf arbeitenden hydrostatischen Getrieben mit einer Einspeisung in diesen geschlossenen Kreislauf und einem Druckbegrenzungsventil zur Begrenzung des Druckes in der Einspeiseleitung ist in der jeweils den niedrigeren Druck führenden Leitung des geschlossenen Kreislaufes zumindest in der Nähe der Einmündung der Speiseleitung der durch das Druckbegrenzungsventil begrenzte Speisedruck vorhanden. Bei einem bekannten hydrostatischen Getriebe dieser Art ist an den beiden Anschlüssen der Pumpe des hydrostatischen Getriebes jeweils neben dem Anschluß der Einspeiseleitung je eine Ausspeiseleitung angeschlossen, wobei diese beiden Ausspeiseleitungen zu zwei Anschlüssen eines als 3/3-Wegeventil ausgestalteten Spülventiles führen, an dessen dritten Anschluß ein als Sitzventil ausgestaltetes Druckbegrenzungsventil angeschlossen ist (US—A— 3 846 982=DE—A—22 31 421). Bei hydrostatischen Getrieben in aufgeloster Bauform mit längeren Leitungen können sich durch die Strömungsverhältnisse und Strömungswiderstände in diesen Leitungen jedoch zeitlich an von der Einspeisungsstelle entfernten Stellen auch höhere Drücke ergeben, insbesondere in der Nähe des Hydromotors, da die zum Bewegen des Hydromotors erforderlichen Kolbenkräfte den Druck vor diesem Hydromotor bestimmen. Ist das Ausspeiseventil ein Druckbegrenzungsventil der bisher bekannten Ausgestaltungsform, so tritt durch dieses bei dem vorgegebenen Druck ein bestimmter Arbeitsmediumstrom aus. Bei einem im offenen Kreislauf arbeitenden hydrostatischen Getriebe können auf beiden Seiten des Hydromotors, das heißt in beiden Anschlußleitungen desselben, gleichzeitig relativ hohe Drücke auftreten, beispielsweise dann, wenn der Motor an die Pumpe über ein Umsteuerventil angeschlossen ist, durch das die Durchströmungsrichtung und damit die Drehrichtung des Motors bestimmt wird. Dann ist es möglich, daß beim Umsteuern während einer zum Erzielen hinreichend geringer Leckverluste erforderlichen Überschneidungsphase sowohl in der einen Anschlußleitung der Pumpendruck ansteht, als auch in der anderen Anschlußleitung ein Staudruck durch die Drosselung in dem Umsteuerventil ansteht. Das Gleiche kann entstehen, wenn durch Drosselung in der Abflußleitung gebremst werden soll. Ist das Ausspeiseventil ein Druckbegrenzungsventil der bisher bekannten Art, so steigt der durch dieses Ventil austretende Strom mit zunehmendem, in dem jeweiligen Niederdruckanschluß des Hydromotors anstehendem Druck an. Fließt der durch das Ausspeiseventil austretende Strom in den Innenraum des Gehäuses des Hydromotors, kann in diesem durch einen zu großen durchfließenden Strom bei nicht hinreichend dimensionierter oder zu langer Abflußleitung ein unzulässig hoher Druck entstehen. Diese Nachteile können vermieden werden, indem ein Druckbegrenzungs- und Mengen-Regelventil gemäß der Erfindung verwendet wird als Ausspeiseventil an einem hydrostatischen Getriebe mit einem Motor, an dessen beide Anschlußleitungen ein von dem Druck in der den jeweils höheren Druck führenden Anschlußleitung gesteuertes 3/3-Wegeventil angeschlossen ist, durch das die den jeweils niedrigeren Druck führende Anschlußleitung mit dem Abflußanschluß dieses 3/3-Wegeventils verbindbar ist, wobei das Ventil gemäß der Erfindung an diesen Abflußanschluß des 3/3-Wegeventiles angeschlossen und so aus gebildet ist, daß es seine Druckbegrenzungsfunktion nur bis zu einem vorbestimmten Wert des in der Ausspeiseleitung anstehenden Druckes ausübt und bei weiterem Steigen des Druckes eine Konstantstromregelung bewirkt.

In der Zeichnung sind zwei Ausführungsbeispiele des Ventiles gemäß der Erfindung dargestellt.

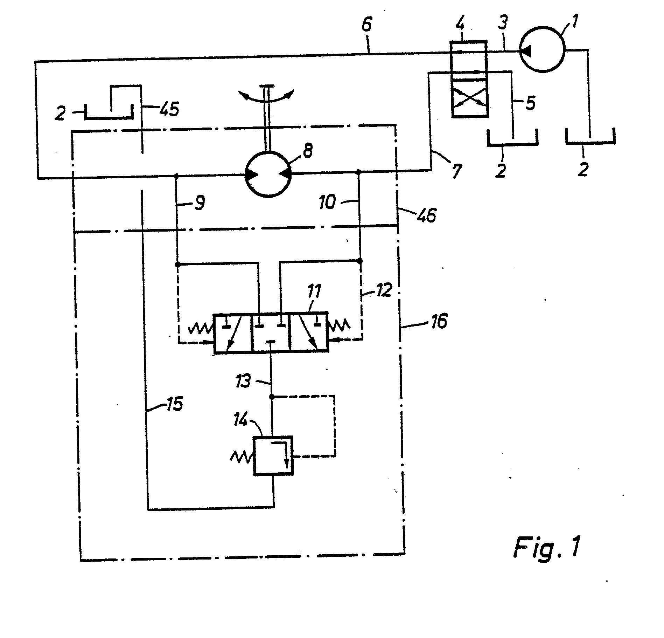

Figur 1 zeigt ein Schaltschema zu einem hydrostatischen Getriebe.

Figur 2 zeigt ein Druckbegrenzungs- und Mengenregelventil gemäß der Erfindung im Schnitt.

Figur 3 zeigt eine Abwicklung des Umfanges des Schieberkolbens des Ventiles gemäß Figur 2.

Figur 4 zeigt eine Abwicklung einer abgewandelten Ausgestaltungsform des Schieberkolbens.

Die Getriebepumpe 1 saugt aus einem Tank 2 an und fördert in eine Druckleitung 3, die zu einem Zweistellungs-4-Wegeventil 4 führt. Der zweite Anschluß 5 dieses Ventile 4 führt ebenfalls zu dem Tank 2. Der dritte Anschluß führt zu der Anschlußleitung 6 des Hydromotors 8 und der vierte Anschluß führt zu der Anschlußleitung 7 des Hydromotors 8. An die Anschlußleitung 6 ist eine Ausspeiseleitung 9 angeschlossen und an die Anschlußleitung 7 ist eine Ausspeiseleitung 10 angeschlossen. Diese beiden Ausspeiseleitungen 9 und 10 sind an das 3-Wege-3-Stellungsventil 11 angeschlossen. Von jeder der beiden Ausspeiseleitungen 9 und 10 führt eine Steuerleitung 12 zu dem Wegeventil 11, so daß dieses von der jeweils den höheren Druck führenden der beiden Anschlußleitungen 9 und 10 gesteuert wird und zwar derart, daß die jeweils den niedrigeren Druck führende der beiden Ausspeiseleitungen 9 und 10 an die Ausspeiseleitung 13 angeschlossen ist, die zu dem Ventil 14 führt.

In einer Schaltung gemäß dem als bekannt vorausgesetzten Stand der Technik wäre das Ventil 14 ein normales Druckbegrenzungsventil und wäre in der Leitung 13 eine Drosselstelle angeordnet.

Die Ausspeiseventileinrichtung bestehend aus den Ventilen 11 und 14 ist in einem Gehäuse 16 angeordnet, welches an das Gehäuse 46 des Hydromotors 8 angeflanscht ist. Die aus dem Ventil 14 herausführende Ablaufleitung 15 führt in den Innenraum des Gehäuses 46 des Hydromotors 8. An diesen Innenraum ist an einer geeigneten anderen Stelle eine weitere Ablaufleitung 45 angeschlossen, die zum Tank 2 führt.

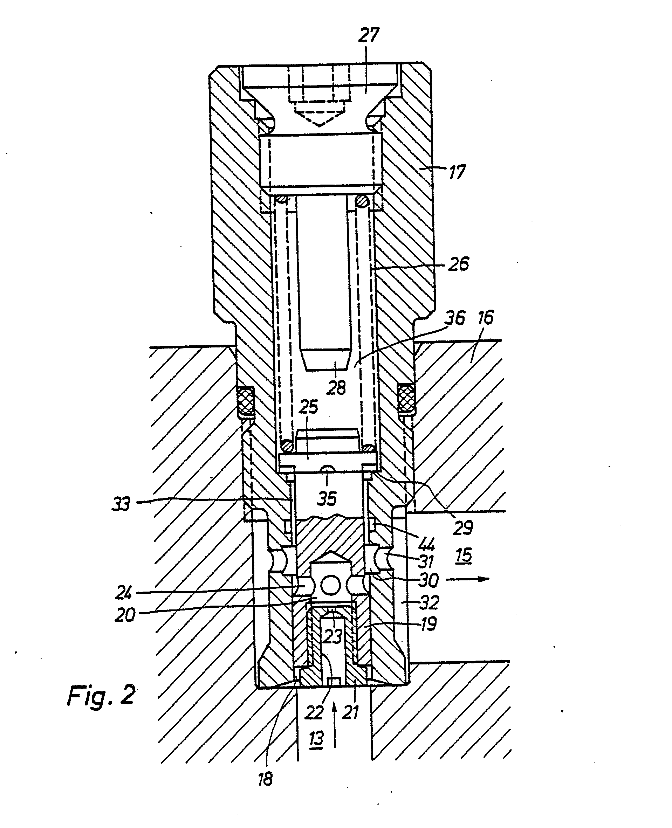

In Figur 2 ist ein Ventil 14 gemäß der Erfindung im Schnitt dargestellt, wobei dieses Ventil 14 in eine Bohrung in dem Gehäuse 16 eingeschraubt ist, wobei in diesem Gehäuse 16 einerseits die Ausspeiseleitung 13, andererseits die Ablaufleitung 15 gebildet sind. Das Gehäuse 16 kann auch ein Gehäuse einer in der Zeichnung nicht mehr weiter dargestellten Ventilkombination sein, kann aber auch Gehäuse eines in der Zeichnung weiter nicht mehr dargestellten Hydromotors bzw. von dessen Steuerteil sein.

Das Ventil 14 weist ein Ventilgehäuse 17 auf, in dem eine Längsbohrung 18 gebildet ist, in der ein Schieberkolben 19 längs verschiebbar ist. Dieser Schieberkolben 19 weist eine Längsbohrung auf, in deren unteren Teil ein Drosselkörper 21 eingeschraubt ist, der seinerseits eine Längsbohrung 22 und in dieser eine Drosselstelle 23 aufweist. Von der Längsbohrung 20 aus gehen vier Querbohrungen 24, die am Umfang des Schieberkolbens 19 münden. Der Schieberkolben 19 hat an seinem in der Zeichnung oberen Ende einen Bund 25, gegen den die Feder 26 anliegt, die andererseits gegen den Stopfen 27 abgestützt ist, der mit einem Anschlagzapfen 28 versehen ist. Der Bund 25 kann gegen eine Schulter 29 in der Längsbohrung im Gehäuse 17 anliegen und bildet somit einen Anschlag für eine Endlage des Schieberkolbens 19 während der Anschlagzapfen 28 einen Anschlag für die andere Endlage des Schieberkolbens 19 bildet.

Im Gehäuse 17 ist weiterhin ein Ringraum 30 gebildet, in den Querbohrungen 31 münden, die zu einem äußeren Ringraum 32 führen, der mit der Ablaufleitung 15 in Verbindung steht.

Am Umfang des Schieberkolbens 19 sind zwei Abflachungen 33 gebildet, die in einer Auslaufnut 34 unterhalb des Bundes 25 münden, wobei in dem Bund 25 Ausnehmungen 35 angeordnet sind, die durch die Abflachungen 33 und die Ausnehmung 34 strömender Flüssigkeit ermöglichen, zwischen dem Bund 25 und der Schulter 29 hindurch in den Raum 36 zu fließen, in dem die Feder 26 angeordnet ist.

Die Wirkungsweise ist folgende: In der Ausspeiseleitung 13 steht ein bestimmter Druck an, der auf die Stirnfläche des Schieberkolbens 19 einschließlich dessen Einsatz 21 wirkt. Dieser Druck pflanzt sich durch die Längsbohrung 22, die Drosselverengung 23, die Längsbohrung 20 und die Querbohrungen 24 fort.

Da in dem Ringraum 32 und damit auch in der Querbohrung 31 der in der Ablaufleitung 15 anstehende Druck herrscht, herrscht ein entsprechender Druck auch in dem Ringraum 30.

Über die Abflachung 33 erfolgt ein Druckausgleich zwischen dem Druck im Ringraum 30 und dem Druck im Federraum 36. Das Druckgefälle zwischen der Ausspeiseleitung 13 und der Ablaufleitung 15 entsteht an der Drosselverengung 23 und zusätzlich an der Abflachung 33 zwischen Querbohrung 24 und Ringraum 30. Bei zunehmendem Druck in der Ausspeiseleitung 13 vergrößert sich das Druckgefälle und der Schieberkolben 19 wird gegen die Kraft der Feder 26 zurückgedrückt, so daß die Querbohrung 24 mit dem Ringraum 30 in Verbindung kommt und auf dem Weg Ausspeiseleitung 13. Längsbohrung 22, Drosselverengung 23, Längsbohrung 20, Querbohrung 24, Ringraum 30, Querbohrungen 31 die Flüssigkeit in den Ablaufkanal 15 strömt. Insoweit ist eine Druckbegrenzungswirkung (ÜV-Funktion, Überdruckventilfunktion) vorhanden. Desto größer das Druckgefälle infolge der Drosselverengung 23 wird, desto weiter wird der Schieberkolben 19 zurückgeschoben. Bei weiterem Zurückschieben des Schieberkolbens 19 nach in der Zeichnung oben nähert sich die in der Zeichnung untere Kante der Querbohrung 24 der in der Zeichnung oberen Kante der Ringnut 30, so daß hier eine Drosselwirkung entsteht, durch die der durch das Ventil austretende Strom gedrosselt und damit begrenzt wird. Bei zunehmendem Druckgefälle an der Drosselverengung 23 tritt im Extremfall schließlich der Schieberkolben so weit gegen die Kraft der Feder 26 zurück, daß die Mündungen der Querbohrung 24 völlig auf der der Feder 26 zugewandten Seite des Ringraumes 30 liegen und somit ein völliger Abschluß der Bohrung 18 oberhalb des Ringraumes 30 gegeben ist. Die Querbohrungen 24 stehen jedoch über die Abflachungen 33 mit dem Federraum 36 in Verbindung. Da bei dieser Lage des Schieberkolbens 19 keine Strömung mehr stattfindet, tritt an der Drosselverengung 23 kein Druckgefälle mehr auf, so daß auf beiden Stirnseiten des Schieberkolbens 19 der gleiche Druck ansteht mit der Folge, daß die Feder 26 den Schieberkolben 19 wieder nach unten schiebt, bis ein Gleichgewicht zwischen der durch die Druckdifferenz, die durch das Druckgefälle an der Drosselverengung 23 entsteht, auf die Stirnflächen des Schieberkolbens 19 ausgeübten Kraft und der Kraft der Feder 26 entsteht, so daß eine Stromregelfunktion durch die Drosselung zwischen den Querbohrungen 24 und der Ringut 30 gegeben ist (in der Extremlage, in der der Schieberkolben 19 ganz gegen den Anschlag 28 verschoben ist und somit die Bohrung 18 unterhalb der Mündungen der Querbohrungen 24 völlig verschlossen ist, tritt trotz hohem in der Ablaufleitung 13 anstehendem Druck keine Flüssigkeit mehr durch das Ventil 14 aus).

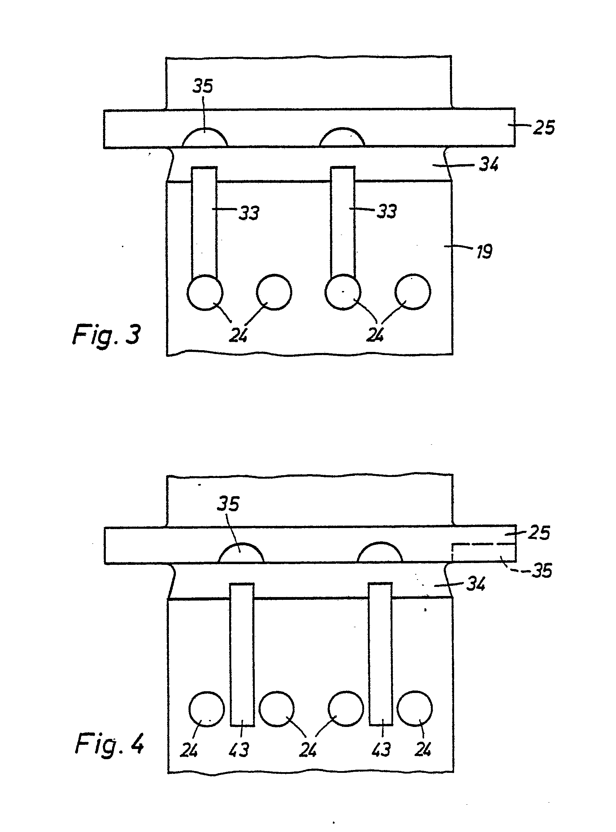

In Figur 4 ist eine abweichende Ausgestaltungsform dargestellt. Während bei den in den Figuren 2 und 3 dargestellten Ausgestaltungsformen die Abflachungen 33 unmittelbar in die Mündungen der Querbohrungen 24 übergehen, sind bei der Ausgestaltungsform gemäß Figur 4 die Abflachungen 43 zwischen den Mündungen der Querbohrungen 24 angeordnet. Das hat die Folge, daß in der in Figur 2 unteren Endlage des Schieberkolbens 19 die Querbohrungen 24 vollkommen von der Wand der Bohrung 18 abgedeckt und verschlossen sind. Erst dann, wenn infolge des Zurückweichens des Schieberkolbens 19 gegen die Kraft der Feder 26 die Mündungen der Querbohrungen 24 mit der Ringnut 30 in Verbindung kommen, wird durch die Ringnut 30 eine Verbindung zwischen den Querbohrungen 24 und den Abflachungen 43 geschaffen. Auch hier ist dann, wenn der Schieberkolben 19 gegen die Kraft der Feder 26 ganz zurückgedrückt wird, so daß er gegen den Anschlagzapfen 28 anliegt, durch das in der Zeichnung untere Teil des Schieberkolbens 19 die Bohrung 18 vollkommen abgeschlossen. In diesem Falle ist eine zusätzliche Ringnut 44 vorgesehen, durch die dann, wenn der Schieberkolben 19 gegen die Kraft der Feder 26 so weit zurückgedrückt ist, daß der Schieberkolben 19 die Bohrung 18 an der in der Zeichnung oberen Kante der Ringnut 30 vollkommen abschließt, durch die zusätzliche Ringnut 44 eine Verbindung zwischen den Mündungen der Querbohrungen 24 und der Abflachung 43 gebildet ist, damit auf diesem Wege der Federraum 36 mit Druck beaufschlagt wird, damit die Kraft der Feder 26 ausreicht, um dann, wenn der Druck in der Ausspeiseleitung 13 sinkt, den Schieberkolben 19 wieder nach in der Zeichnung unten zu drücken.

**Patentansprüche**

1. Druckbegrenzungs- und Mengenregelventil (14) für ein hydrostatisches Getriebe mit einem in einer Bohrung (18) schließend gegen die Kraft einer Feder (26) verschiebbaren Schieberkolben (19), der eine zur Zulaufseite offene, mit einer Drosselverengung (23) versehene Längsbohrung (22) aufweist, die in eine Querbohrung (24) mündet, wobei an der genannten Bohrung (18) eine mit einer Ablaufquerbohrung (31) verbundene Ringnut (30) und mindestens ein Anschlag (29) für eine Endlage des Schieberkolbens (19) vorgesehen sind, dadurch gekennzeichnet, daß die Querbohrung (24) im Schieberkolben (19) in dessen Endlage von der Wand der Bohrung (18) völlig abgeschlossen ist und der Schieberkolben (19) so weit gegen die Kraft der Feder (26) verschiebbar ist, daß auch in der Lage der weitesten Verschiebung gegen die Kraft der Feder (26) die Querbohrung (24) im Schieberkolben (19) von der Wand der Bohrung (18) auf der anderen Seite der Ringnut (30) abgedeckt ist und daß in dieser Lage des Schieberkolbens (19) eine Verbindung (33, 34, 35 bzw. 43, 34, 35) zwischen der Längsbohrung (22) und dem geschlossenen die Feder (26) enthaltenden Raum (36) vorhanden ist.

2. Druckbegrenzungs- und Mengenregelventil nach Anspruch 1, dadurch gekennzeichnet, daß die Verbindung durch eine in Längsrichtung des Schieberkolbens (19) verlaufende Abflachung (33 oder 43) an diesem gebildet ist.

3. Druckbegrenzungs- und Mengenregelventil nach Anspruch 2, dadurch gekennzeichnet, daß die Abflachung (33) von der Mündung der Querbohrung (24) im Schieberkolben (19) ausgeht.

4. Ventil nach Anspruch 2, dadurch gekennzeichnet, daß die Abflachung (43) neben der Mündung der Querbohrung (24) im Schieberkolben (19) angeordnet ist und in der Wand der Bohrung (18) im Gehäuse (17) zwischen der Ringnut (30) und dem Federraum (26) eine Zusatzringnut (44) angeordnet ist.

5. Verwendung eines Druckbegrenzungs- und Mengenregelventiles (14) nach einem der vorangegangenen Ansprüche in einem hydrostatischen Getriebe mit einem Motor (8) und mit einem an die beiden Anschlußleitungen (6 und 7) dieses Motors (8) angeschlossenen, von dem Druck in der den jeweils höheren Druck führenden Anschlußleitung (6 bzw. 7) gesteuerten 3/3-Wegeventil (11), durch das die den jeweils niedrigeren Druck führende Anschlußleitung (6 bzw. 7) mit dem Abflußanschluß dieses 3/3-Wegeventiles (11) verbindbar ist, wobei das Druckbegrenzungs-und Mengenregelventil (14) in der Ausspeiseleitung (13) des 3/3-Wegeventiles (11) angeordnet und so ausgebildet ist, daß es seine Druckbegrenzungsfunktion nur bis zu einem vorbestimmten Wert des in der Ausspeiseleitung (13) anstehenden Druckes ausübt und bei weiterem Steigen des Druckes eine Konstantstromregelung ausübt.

Revendications

1. Soupape de limitation de pression et de régulation de débit (14) pour une transmission hydrostatique, comportant un piston-tiroir (19) pouvant coulisser dans un alésage (18) en opposition à la force d'un ressort (26) qui comporte un trou longitudinal (22) ouvert du côté d'admission, pourvu d'un rétrécissement d'étranglement (23) et qui débouche dans un trou transversal (24), l'alésage précité (18) étant pourvu d'une gorge (30) reliée à un trou transversal de décharge (31) et d'au moins une butée (29) pour définir une position limite du piston-tiroir (19), caractérisée en ce que le trou transversal (24) prévu dans le piston-tiroir (19) est complètement fermé dans sa position limite par la paroi de l'alésage (18) et le piston-tiroir (19) peut être déplacé en opposition à la force du ressort (26) suffisamment loin pour qu'également dans la position de translation maximale en opposition à la force du ressort (26), le trou transversal (24) du piston-tiroir (19) soit recouvert par la paroi de l'alésage (18) de l'autre côté de la gorge (30) et en ce que dans cette position du piston-tiroir (19), une liaison (33, 34, 35 ou 43, 34, 35) est établie entre le trou longitudinal (22) et le volume fermé (36) contenant le ressort (26).

2. Soupape de limitation de pression et de régulation de débit selon la revendication 1, caractérisée en ce que la liaison est établie, sur le piston-tiroir (19), par un méplat (33 ou 43) orienté dans sa direction longitudinale.

3. Soupape de limitation de pression et de régulation de débit selon la revendication 2, caractérisée en ce que le méplat (33) part de l'embouchure du trou transversal (24) prévu dans le piston-tiroir (19).

4. Soupape selon la revendication 2, caractérisée en ce que le méplat (43) est placé à côté de l'embouchure du trou transversal (24) prévu dans le piston-tiroir (19) et en ce qu'il est prévu dans la paroi de l'alésage (18) ménagé dans le corps (17) une gorge additionnelle (44) entre la gorge (30) et le volume de ressort (26).

5. Utilisation d'une soupape de limitation de pression et de régulation de débit selon une des revendications précédentes dans une transmission hydrostatique comportant un moteur (8) et une vanne ou ditributeur à trois voies (11) reliée aux deux conduits de raccordement (6) et (7) de ce moteur (8) et commandée par la pression régnant dans le conduit de raccordement (6) ou (7) transmettant à chaque fois la pression supérieure, et par lequel le conduit de raccordement (6) ou (7) transmettant à chaque fois la pression inférieure peut être relié avec le raccord de décharge de cette vanne ou distributeur à trois voies (11), la soupape de limitation de pression et de régulation de débit (14) étant disposé dans le conduit d'alimentation (13) de la vanne ou distributeur à trois voies (11) et étant agencé de manière que sa fonction de limitation de pression soit remplie seulement jusqu'à une valeur prédéterminée de la pression existant dans le conduit d'alimentation (13) alors que, lors d'une autre augmentation de la pression, il exerce une fonction de régulation de débit constant.

Claims

1. A pressure relief and flow control valve (14) for a hydrostatic gear having a sliding piston (19) which is displaceable in sealing manner in a bore (18) against the force of a spring (26), and which has a longitudinal bore (22) which opens at the inlet side and is provided with a throttle constriction (23), and which opens into a cross bore (24), where in said bore (18) there are arranged an annular groove (30), which is connected to a discharge cross bore (31), and at least one stop (29) for an end position of the sliding piston (19), characterised in that the cross bore (24) in the sliding piston (19) is completely closed off by the wall of the bore (18) in the end position of said sliding piston (19) and the sliding piston (19) is displaceable against the force of the spring (26) to such an extent that, also in the position of furthest displacement against the force of the spring (26), the cross bore (24) in the sliding piston (19) is covered by the wall of the bore (18) on the other side of the annular slot (30); and that in this position of the sliding piston (19), a connection (33, 34, 35 and 43, 34, 35) is present between the longitudinal bore (22) and the closed space (36) which contains the spring (26).

2. A pressure relief and flow control valve according to Claim 1, characterised in that the connection is formed by a flat (33 or 43) on the sliding piston (19) which extends in the longitudinal direction of the sliding piston (19).

3. A pressure relief and flow control valve according to Claim 2, characterised in that the flat (33) starts at the opening of the cross bore (24) in the sliding piston (19).

4. A valve according to Claim 2, characterised in that the flat (43) is arranged beside the opening of the cross bore (24) in the sliding piston (19) and an additional annular groove (44) is arranged in the wall of the bore (18) in the housing (17) between the annular groove (30) and the spring space (26).

5. The use of a pressure relief and flow control valve (14) according to one of the preceding Claims in a hydrostatic gear having a motor (8) and a 3/3-way valve (11) which is connected to the two connection lines (6 and 7) of the motor (8) and which is controlled by the pressure in the connection line (6 or 7 as the case may be), which carries the higher pressure, by means of which valve (11) the connection line (6 or 7 as the case may be) carrying the lower pressure can be connected to the discharge connection of said 3/3-way valve (11), wherein the pressure relief and flow control valve (14) is arranged in the outlet line (13) of the 3/3-way valve (11) and is so formed that it carries out its pressure-limiting function only up to a predetermined value of the pressure which prevails in the outlet line (13), and carries out a constant-flow control when the pressure rises further.

Fig. 1

Fig. 2

Fig. 3

Fig. 4